(19) Europäisches Patentamt
European Patent Office
Office européen des brevets

(11) **EP 2 065 685 B1**

(12) **EUROPÄISCHE PATENTSCHRIFT**

(45) Veröffentlichungstag und Bekanntmachung des Hinweises auf die Patenterteilung:
**30.09.2020   Patentblatt 2020/40**

(51) Int Cl.:
**G01F 23/18** *(2006.01)*          **A47J 31/44** *(2006.01)*
**B67D 1/12** *(2006.01)*

(21) Anmeldenummer: **08019505.0**

(22) Anmeldetag: **07.11.2008**

(54) **Vorrichtung zum Messen des Füllstandes eines flüssigen Lebensmittels in einem Behälter**

Device for measuring the filling level of liquid food in a container

Capteur de niveau de remplissage pour un aliment liquide dans un récipient

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.11.2007   DE 102007057832**

(43) Veröffentlichungstag der Anmeldung:
**03.06.2009   Patentblatt 2009/23**

(73) Patentinhaber: **FRANKE Kaffeemaschinen AG
4663 Aarburg (CH)**

(72) Erfinder:
• **Stürken, Holger
8586 Erlen (CH)**
• **Hoch, Hans-Peter
4805 Brittnau (CH)**

(74) Vertreter: **Lemcke, Brommer & Partner
Patentanwälte Partnerschaft mbB
Siegfried-Kühn-Straße 4
76135 Karlsruhe (DE)**

(56) Entgegenhaltungen:
EP-A- 1 472 963          WO-A- 97/47376
DE-A1- 3 714 956       DE-U1-202004 019 878
GB-A- 2 157 963        GB-A- 2 186 317
GB-A- 2 367 625        US-A1- 2004 011 127
US-B1- 6 260 477       US-B1- 6 425 293
US-B1- 6 932 028

**Beschreibung**

Die Erfindung betrifft eine Füllstandsmessvorrichtung zum Messen des Füllstandes von flüssigen Lebensmitteln gemäß Oberbegriff des Anspruchs 1.

Behälter für flüssige Lebensmittel finden bei einer Vielzahl von Vorrichtungen zur Herstellung oder Ausgabe von flüssigen Lebensmitteln Anwendung.

Typischerweise wird bei diesen Vorrichtungen mittels einer Pumpe ein flüssiges Lebensmittel aus dem Behälter über eine Förderleitung entnommen. Gleichzeitig wird mittels einer Füllstandsmessvorrichtung der Füllstand des Behälters überwacht, sodass bei leerem Behälter oder zumindest bei Unterschreiten eines niedrigen Füllstandes vorgegebene Aktionen ausgeführt werden können, wie beispielsweise Ausgabe eines entsprechenden Signals an den Benutzer oder Abbrechen des Pumpvorgangs.

Ein typisches Anwendungsgebiet für solche Füllstandsmessvorrichtungen sind Kaffeemaschinen, bei denen zusätzlich zu dem von einer Brüheinheit erzeugten Kaffee auch andere flüssige Lebensmittel in eine Tasse ausgegeben werden sollen, wie beispielsweise Milch und/oder Sirup. Solche Kaffeemaschinen weisen typischerweise eine Kühleinheit auf, in der zum Beispiel ein Milchbehälter gelagert wird. Aus dem Milchbehälter wird Milch je nach Bedarf abgepumpt, wobei bei leerem Behälter der Pumpvorgang unterbrochen wird, sodass die Pumpe nicht "trocken läuft", d. h. nicht ohne Flüssigkeitsförderung betrieben wird.

Hierbei ist es bekannt, den Füllstand des Behälters mittels einer Füllstandsmessvorrichtung zu überwachen, welche einen kapazitativen Widerstand umfasst. Der kapazitative Widerstand ist nahe oder an dem Behälter angeordnet. Befindet sich kein oder nur noch wenig flüssiges Lebensmittel in dem Behälter, so ändert sich der Widerstandswert des kapazitativen Widerstandes, sodass hierdurch der Füllstand detektiert werden kann. Problematisch bei solchen Vorrichtungen ist, dass die Funktionalität der Füllstandsüberwachung von der Anordnung zwischen kapazitativen Widerstand und Behälter abhängig ist und dass darüber hinaus die Messung ungenau ist, sodass häufig ein leerer Behälter detektiert wird, obwohl sich noch ein erheblicher Rest des flüssigen Lebensmittels im Behälter befindet. Des Weiteren stellt die Ansteuerung und Überwachung des kapazitativen Widerstandes eine hohe Anforderung an das Steuersystem, sodass eine genaue Kalibrierung notwendig ist und Dejustierungen auftreten können, welche zu weiteren Verfälschungen des Messergebnisses und damit des Detektionsvorganges führen.

Ebenso ist es bekannt, den Füllstand des Behälters dadurch zu ermitteln, dass das Gewicht des Behälters gemessen wird. Auch hier ist die genaue Detektion des Füllstandes jedoch problematisch, da für eine exakte Detektion das genaue Leergewicht des Behälters bekannt sein müsste. Es ergeben sich somit Ungenauigkeiten bei der Messung, die dazu führen, dass ein nicht vollständig leerer Behälter als leer detektiert und entsprechend ausgetauscht wird, obwohl er noch eine nicht unerhebliche Restmenge des flüssigen Lebensmittels enthält.

Die US 2004/0011127 A1 beschreibt eine Füllstandsmessung für den Flüssigkeitspegel in einem Behälter mittels eines Tauchrohres, welches gleichzeitig zum Befüllen oder Entleeren des Behälters dient. Eine Füllstandsmessung erfolgt hierbei durch Anlegen von Unterdruck und Überdruck, bis entweder Luft unten aus dem Tauchrohr austritt, oder der Flüssigkeitspegel bis zu einer Querschnittsänderung im Tauchrohr ansteigt. Die gemessene Druckdifferenz jeweils zwischen Umgebungsdruck und dem oberen Grenzdruck und unteren Grenzdruck soll auf den Betrag der Differenz zwischen diesen beiden Messwerten kalibriert werden, sodass der Messwert unabhängig vom Umgebungsdruck ist. Der Umgebungsdruck selbst wird dabei nicht gemessen.

Die GB 2 186 317 A beschreibt eine Messvorrichtung zur Messung von Füllstand und Dichte einer Flüssigkeit in einem Tank. Hierzu sind drei in unterschiedliche Tiefe in den Tank hineinragende Drucksonden sowie eine vierte, über dem Flüssigkeitspegel befindliche Drucksonde vorgesehen, mit der der Umgebungsdruck gemessen wird.

Die US 6,425,293 B1 beschreibt einen Drucksensor zur Messung des Innendrucks in einem Getriebe. Der dort verwendete Sensor ist ein Differenzdrucksensor, der den Differenzdruck zwischen dem Innendruck und dem Umgebungsdruck misst. Alternativ soll aber auch ein absoluter Drucksensor verwendet werden können, sowie ein zusätzlicher Sensor zur Ermittlung des Umgebungsdrucks.

Aus den Schriften GB 2 157 963 A sowie US 6,260,477 B1 sind Vorrichtungen zur Aufbewahrung bzw. Verarbeitung gekühlter flüssiger Lebensmittel bekannt. Die GB 2 157 963 A beschreibt eine Vorrichtung zum Anreichern von Wein mit Kohlesäure. Zwei Füllstandsensoren überwachen, dass der Füllstand im eigentlichen Karbonisierer im vorgesehenen Bereich bleibt. Die US 6,260,477 B1 beschreibt eine Vorrichtung zum Mischen eines Getränks aus einem Getränkekonzentrat und Wasser. Sinkt der Füllstand in einem Tank ab, so wird automatisch neues Getränk gemischt und nachgefüllt.

Der Erfindung liegt die Aufgabe zugrunde, die bekannten Füllstandstandsmessvorrichtungen zum Messen des Füllstandes des flüssigen Lebensmittels in einem Behälter dahingehend zu verbessern, dass eine kostengünstigere und gleichzeitig eine genauere Überwachung des Füllstandes des Behälters für flüssige Lebensmittel möglich ist.

Gelöst ist diese Aufgabe durch eine Füllstandsmessvorrichtung gemäß Anspruch 1. Vorteilhafte Ausgestaltungen der Vorrichtung finden sich in den Ansprüchen 2 bis 12.

Die erfindungsgemäße Füllstandsmessvorrichtung zum Messen des Füllstandes von flüssigen Lebensmitteln in einem Behälter umfasst somit eine Sensoreinheit und eine Auswerteeinheit, wobei die Auswerteeinheit mit der Sensoreinheit verbunden ist. Die Auswerteeinheit ermittelt abhängig von den Messsignalen der Sensoreinheit den Füllstand des flüssigen Lebensmittels in dem Behälter.

Wesentlich ist, dass die Sensoreinheit einen Behälterdrucksensor umfasst. Dieser Behälterdrucksensor ist mit dem flüssigen Lebensmittel in dem Behälter in Wirkverbindung bringbar, sodass der Druck des flüssigen Lebensmittels in dem Behälter mittels des Behälterdrucksensors messbar ist. Weiterhin ist die Auswerteeinheit derart ausgeführt, dass sie den Füllstand des flüssigen Lebensmittels in dem Behälter abhängig von der Differenz des gemessenen Flüssigkeitsdruckes zu einem Umgebungsdruck ermittelt.

Außerdem umfasst die Messvorrichtung mindestens eine Druckverbindung, welche mit dem Behälterdrucksensor in Wirkverbindung steht. Die Druckverbindung wird einerseits bei Verwendung der erfindungsgemäßen Füllstandsmessvorrichtung in den Behälter mit dem flüssigen Lebensmittel eingeführt, sodass ein Ende der Druckverbindung nahe des Bodens des Behälters angeordnet ist. Ein anderes Ende der Druckverbindung ist mit dem Behälterdrucksensor verbunden, sodass über die Druckverbindung der Behälterdrucksensor den Flüssigkeitsdruck im Bodenbereich des Behälters ermittelt. Zur einfachen Handhabung der erfindungsgemäßen Füllstandsvorrichtung umfasst die Druckverbindung einen Verschluss für den Behälter für flüssige Lebensmittel. Die Druckverbindung ist dabei derart an dem Verschluss befestigt, dass bei auf dem Behälter aufgesetztem Verschluss das in den Behälter hineinreichende Ende der Druckverbindung im Bereich des Bodens des Behälters endet.

Bei der erfindungsgemäßen Füllstandsmessvorrichtung wird somit der Flüssigkeitsdruck des flüssigen Lebensmittels im Behälter gemessen. Die Erfindung nutzt den Umstand aus, dass der Druck des flüssigen Lebensmittels stets höher ist, als der Umgebungsdruck. Abhängig von der Druckdifferenz zwischen Flüssigkeitsdruck und Umgebungsdruck kann somit detektiert werden, ob sich am Messort in dem Behälter Flüssigkeit befindet oder nicht:
Sofern der gemessene Druck größer als der Umgebungsdruck ist, befindet sich am Messort des Behälterdrucksensors noch flüssiges Lebensmittel.

Bei diesem Messverfahren kann somit auf bewährte Bestandteile wie Behälterdrucksensoren zurückgegriffen werden und die Nachteile einer Messung mittels kapazitativen Widerstandes werden vermieden.

Vorteilhafterweise wird der Flüssigkeitsdruck im Bereich des Bodens des Behälters gemessen, sodass erst bei leerem oder nahezu leerem Behälter der Druck am Behälterdrucksensor dem Umgebungsdruck entspricht, sodass keine oder nur eine vernachlässigbar kleine Restmenge flüssigen Lebensmittels in dem Behälter bei detektiertem leerem Behälter verbleibt.

Insbesondere ist es vorteilhaft, den Flüssigkeitsdruck in einer Höhe kleiner 5cm über dem Boden des Behälters, höchstbesondere in einer Höhe kleiner 1 cm über dem Boden des Behälters zu messen.

Wie zuvor beschrieben, nutzt die erfindungsgemäße Füllstandsmessvorrichtung den Umstand, dass der Flüssigkeitsdruck stets höher als der Umgebungsdruck ist. Hierbei kann der Umgebungsdruck herstellerseitig in der Füllstandsmessvorrichtung vorgegeben sein. Typischweise wird ein normierter Umgebungsdruck von 1 bar (1.000 kg/m$^3$) vorgegeben. Da sich der Umgebungsdruck jedoch ändern kann, insbesondere aufgrund der Höhe des Einsatzortes der erfindungsgemäßen Füllstandsmessvorrichtung über dem Meeresniveau, umfasst die Auswerteeinheit der erfindungsgemäßen Füllstandsmessvorrichtung vorzugsweise eine Eingabeeinheit, mittels derer der Umgebungsdruck vorgebbar ist. Hierdurch kann der Benutzer den am Einsatzort aktuell herrschenden Umgebungsdruck eingeben, sodass eine korrekte Bestimmung der Druckdifferenz zwischen Flüssigkeitsdruck und Umgebungsdruck erfolgt.

Zur Vereinfachung der Handhabung der erfindungsgemäßen Messvorrichtung ist es jedoch vorteilhaft, wenn diese zusätzlich einen Umgebungsdrucksensor umfasst. Der Umgebungsdrucksensor ist derart angeordnet, dass der Druck in der Umgebung des Behälters mittels des Umgebungsdrucksensors gemessen werden kann. Die Auswerteeinheit ist mit dem Umgebungsdrucksensor verbunden und ermittelt aus den Messdaten des Umgebungsdrucksensors den Umgebungsdruck.

Hierdurch kann somit vollautomatisch die Differenz zwischen Flüssigkeitsdruck und Umgebungsdruck gebildet werden, ohne dass eine Eingabe vom Benutzer notwendig wäre. Insbesondere ist bei dieser vorteilhaften Ausführungsform eine Verfälschung bei der Bestimmung der Druckdifferenz ausgeschlossen, beispielsweise aufgrund einer Veränderung des Umgebungsdruckes durch eine Veränderung der Wetterlage.

Wie vorhergehend ausgeführt, kann mit der erfindungsgemäßen Füllstandsmessvorrichtung detektiert werden, ob an dem Ort in dem Behälter, an dem der Behälterdrucksensor den Flüssigkeitsdruck misst, Flüssigkeit vorhanden ist oder nicht. Es ist somit zunächst die Detektion eines leeren oder nahezu leeren Behälters mittels der erfindungsgemäßen Füllstandsmessvorrichtung möglich.

Darüber hinaus kann mit der erfindungsgemäßen Füllstandsmessvorrichtung jedoch auch die Höhe des Füllstandes des flüssigen Lebensmittels in dem Behälter über dem Messort, an dem der Flüssigkeitsdruck gemessen wird, bestimmt werden:
Der Druck einer Flüssigkeit in einem Behälter an einem bestimmten Messort ist unabhängig von der Behälterform lediglich vom Umgebungsdruck und von der Höhe des Füllstandes der Flüssigkeit über dem Messort, an dem der Flüssigkeitsdruck gemessen wird, abhängig.

Durch die Bestimmung der Druckdifferenz zwischen Umgebungsdruck und Flüssigkeitsdruck kann somit nicht nur bestimmt werden, ob sich noch Flüssigkeit in dem Behälter befindet, es kann darüber hinaus auch die Füllstandshöhe ermittelt werden. Hierdurch ist beispielsweise eine prozentuale Füllstandsanzeige möglich. Bei bekannter Behälterform ist es ebenso möglich, aus der Füllstandshöhe auf die verbleibende Menge des flüssigen Lebensmittels rückzuschließen und diese dem Benutzer anzuzeigen.

Insbesondere die Bestimmung der Füllstandshöhe erfordert eine genaue Bestimmung der Druckdifferenz zwischen Flüssigkeitsdruck und Umgebungsdruck, sodass insbesondere in dieser vorteilhaften Ausgestaltung ein wie oben beschrieben zusätzlicher Umgebungsdrucksensor vorteilhaft ist, um Messfehler bei der Bestimmung der Druckdifferenz zu vermeiden.

In einer vorteilhaften Ausführungsform ist der Behälterdrucksensor flüssigkeitsdicht ausgeführt und mittels einer elektrischen Leitung zur Übertragung der Messsignale mit der Auswerteeinheit verbunden. Hierdurch kann der Behälterdrucksensor in den Behälter eingeführt werden, sodass er vorzugsweise nahe am Boden des Behälters angeordnet ist. Durch diese Anordnung wird, wie vorhergehend beschrieben, die Füllhöhe des flüssigen Lebensmittels in dem Behälter bestimmt.

Sofern die Höhe bekannt ist, in der bezogen auf den Boden des Behälters der Flüssigkeitsdruck gemessen wird, wird diese Höhe zusätzlich zu der aus der Druckdifferenz ermittelten Füllstandshöhe hinzuaddiert, sodass eine genaue Füllstandshöhe des flüssigen Lebensmittels in dem Behälter erhalten wird.

In einer weiteren vorteilhaften Ausführungsform ist die Druckverbindung als flexibler Schlauch ausgeführt. Der flexible Schlauch ist an einem Ende mit dem Behälterdrucksensor verbunden und durch diesen verschlossen. Das andere Ende des flexiblen Schlauches ist offen und wird in den Behälter mit dem flüssigen Lebensmittel eingeführt, sodass sich das offene Ende des flexiblen Schlauches im Bodenbereich des Behälters befindet. Durch den Flüssigkeitsdruck wird die Luft in dem flexiblen Schlauch etwas komprimiert, sodass eine geringe Menge des flüssigen Lebensmittels in den flexiblen Schlauch eintritt. Ebenso wird über die sich in dem flexiblen Schlauch befindende Luft der Flüssigkeitsdruck an den Behälterdrucksensor weitergegeben und von diesem gemessen.

Da nur eine geringe Menge des flüssigen Lebensmittels in den flexiblen Schlauch eintritt, ist der Wartungs- bzw. Reinigungsaufwand aufgrund der eintretenden Flüssigkeit vernachlässigbar gering. Ebenso ist es auch möglich, das offene Ende des flexiblen Schlauches mit einer flexiblen, jedoch flüssigkeitsundurchlässigen Membran zu verschließen, sodass über die Membran hinaus kein flüssiges Lebensmittel ins Innere des flexiblen Schlauches eintreten kann.

Zur einfachen Handhabung der erfindungsgemäßen Füllstandsvorrichtung umfasst die Druckverbindung vorteilhafterweise einen Verschluss für den Behälter für flüssige Lebensmittel. Bei einer bevorzugten Ausführung ist die Druckverbindung derart an dem Verschluss befestigt, dass bei auf dem Behälter aufgesetzten Verschluss das in den Behälter hineinreichende Ende der Druckverbindung in einem Abstand kleiner 5 cm, höchstbesondere in einem Abstand kleiner 1 cm zu dem Boden des Behälters endet. Insbesondere ist es vorteilhaft, wenn die Druckverbindung starr ausgeführt ist, beispielsweise als Rohr und an dem Ende, welches in den Behälter eingeführt wird, schräg angeschnitten ist. Die Druckverbindung kann hierbei derart bemessen sein, dass sie bei auf dem Behälter aufgesetzten Verschluss auf dem Boden des Behälters aufsteht. Durch das schräg angeschnittene Ende der Druckverbindung ist gewährleistet, dass kein Verschließen der Druckverbindung durch den Boden des Behälters erfolgen kann, sondern dass in unmittelbarer Nähe des Bodens Flüssigkeit aus dem Behälter durch das schräg angeschnittene Ende der Druckverbindung in die Druckverbindung eintreten kann.

Hierdurch wird in einfacher Weise erreicht, dass bei Verschließen des Behälters durch den Benutzer automatisch eine genaue Positionierung des Messpunktes für den Flüssigkeitsdruck im Bereich des Bodens des Behälters gewährleistet ist und Fehlfunktionen vermieden werden.

Hierzu weist die Druckverbindung vorteilhafterweise einen starren und einen flexiblen Teil auf, wobei der bei auf dem Behälter aufgesetzten Verschluss in den Behälter hineinreichende Teil der Druckverbindung starr ausgeführt ist und der restliche Teil der Druckverbindung zumindest stückweise flexibel ausgeführt ist. Hierdurch ist eine einfache Handhabung durch den Benutzer möglich, da der flexible Teil eine Beweglichkeit des Verschlusses relativ zu dem Behälterdrucksensor ermöglicht und der starre Teil gewährleistet, dass innerhalb des Behälters eine korrekte Anordnung der Druckverbindung erfolgt.

Vorteilhafterweise weist die Füllstandsmessvorrichtung zusätzlich eine Förderleitung auf. Diese Förderleitung ist zumindest teilweise an dem in den Behälter hineinreichenden Teil der Druckverbindung angeordnet. Hierdurch kann in einfacher Weise gleichzeitig die Förderleitung und die Druckverbindung in den Behälter eingebracht werden, sodass in nur einem Schritt die Voraussetzungen für die Förderung des flüssigen Lebensmittels aus dem Behälter und für die Messung des Füllstandes gegeben sind.

Vorteilhafterweise ist die Förderleitung gleich der Druckverbindung ausgeführt, d. h. sie weist einen im Wesentlichen starren Teil auf, welcher bei aufgesetztem Verschluss in den Behälter hineinreicht und einen flexiblen Teil außerhalb des Verschlusses, der die Beweglichkeit des Verschlusses beim Wechseln der Behälter ermöglicht.

In einer weiteren vorteilhaften Ausführungsform umfasst die Füllstandsmessvorrichtung eine Förderleitung für das flüssige Lebensmittel und einen Temperaturfühler. Der Temperaturfühler ist mit der Förderleitung thermisch verbunden, sodass die Temperatur einer in der Förderleitung fließenden Flüssigkeit mittels des Temperaturfühlers messbar ist.

Hierdurch kann somit die Temperatur des aus dem Behälter beförderten flüssigen Lebensmittels durch den Temperaturfühler gemessen werden, ohne dass der Temperaturfühler in dem Behälter mit dem flüssigen Lebensmittel angeordnet sein müsste.

Dies erleichtert die Handhabung der erfindungsgemäßen Füllstandsmessvorrichtung beim Wechseln der Behälter, da nicht zusätzlich ein Temperaturfühler aus dem leeren Behälter entfernt und in dem neuen, vollen Behälter angeordnet werden muss.

Eine typische Verwendung der erfindungsgemäßen Füllstandsmessvorrichtung ist eine Kühlvorrichtung für flüssige Lebensmittel, vorzugsweise für Kaffeemaschinen. Insbesondere bei Kaffeemaschinen ist es üblich, eine Kühlvorrichtung mit einem Isolierbehältnis zur Aufnahme eines Behälters für flüssige Lebensmittel vorzusehen, wobei das Isolierbehältnis mittels eines Kühlaggregats gekühlt wird. In das Isolierbehältnis kann beispielsweise ein Behälter mit Milch eingestellt werden, wobei die Kühlung der Milch mittels des Kühlaggregats ein frühzeitiges Verderben verhindert. Die Kühlvorrichtung umfasst eine erfindungsgemäße Füllstandsmessvorrichtung, sodass der Füllstand des flüssigen Lebensmittels in dem in das Isolierbehältnis eingestellten Behälter durch die Füllstandsmessvorrichtung gemessen wird.

In einer vorzugsweisen Ausführungsform ist die Füllstandsmessvorrichtung in dem Isolierbehältnis angeordnet, sodass aus dem Isolierbehältnis lediglich elektrische Leitungen ausgehend von der Auswerteeinheit zur Übertragung der Messergebnisse nach außen geführt werden müssen und die Isolierwirkung des Isolierbehältnisses somit nicht eingeschränkt wird.

Hierbei ist es insbesondere vorteilhaft, dass das Isolierbehältnis durch eine Trennwand in zwei Kammern unterteilt ist, wobei eine erste Kammer zur Aufnahme des Behälters für flüssige Lebensmittel ausgeführt ist und in einer zweiten Kammer die Auswerteeinheit der Füllstandsmessvorrichtung angeordnet ist. Durch die Trennwand wird vermieden, dass eventuell beim Wechseln des Behälters austretendes flüssiges Lebensmittel in die Auswerteeinheit eindringt und diese beschädigt.

Weitere vorteilhafte Ausgestaltungen werden im Folgenden anhand der in den Figuren dargestellten Ausführungsbeispiele erläutert. Dabei zeigt:

Figur 1 eine schematische Darstellung der erfindungsgemäßen Füllstandsmessvorrichtung,

Figur 2 eine Kühlvorrichtung mit einer erfindungsgemäßen Füllstandsmessvorrichtung und einem eingestellten Behälter für flüssige Lebensmittel, bei der die Auswerteeinheit der Füllstandsmessvorrichtung außerhalb eines Isolierbehältnisses der Kühlvorrichtung angeordnet ist und

Figur 3 eine Kühlvorrichtung mit einer erfindungsgemäßen Füllstandsmessvorrichtung, bei der das Isolierbehältnis mittels einer Trennwand in zwei Kammern unterteilt ist.

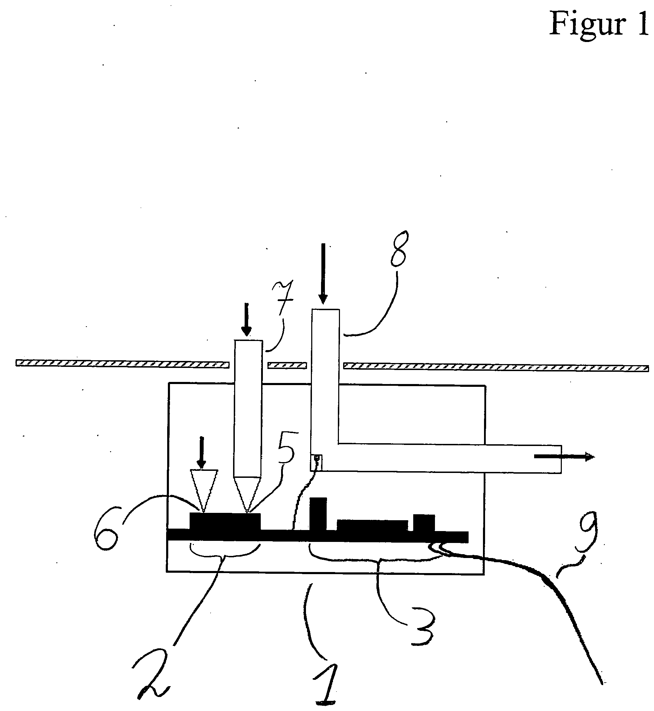

In Figur 1 ist eine erfindungsgemäße Füllstandsmessvorrichtung 1 dargestellt, mit einer Sensoreinheit 2, einer Auswerteeinheit 3 und einem Temperaturfühler 4. Die Sensoreinheit 2 umfasst einen Behälterdrucksensor 5 und einem Umgebungsdrucksensor 6.

Die Füllstandsmessvorrichtung umfasst ferner eine Druckverbindung 7, welche mit dem Behälterdrucksensor 5 in Wirkverbindung steht. Darüber hinaus umfasst die Füllstandsmessvorrichtung eine Förderleitung 8, an der der Temperaturfühler 4 angeordnet ist, sodass die Temperatur einer durch die Förderleitung 8 fließenden Flüssigkeit mittels des Temperaturfühlers messbar ist.

Über eine elektrische Verbindung 9 wird die erfindungsgemäße Füllstandsmessvorrichtung zum Einen mit Strom versorgt und zum Anderen werden die Messergebnisse über die elektrische Verbindung 9 ausgegeben.

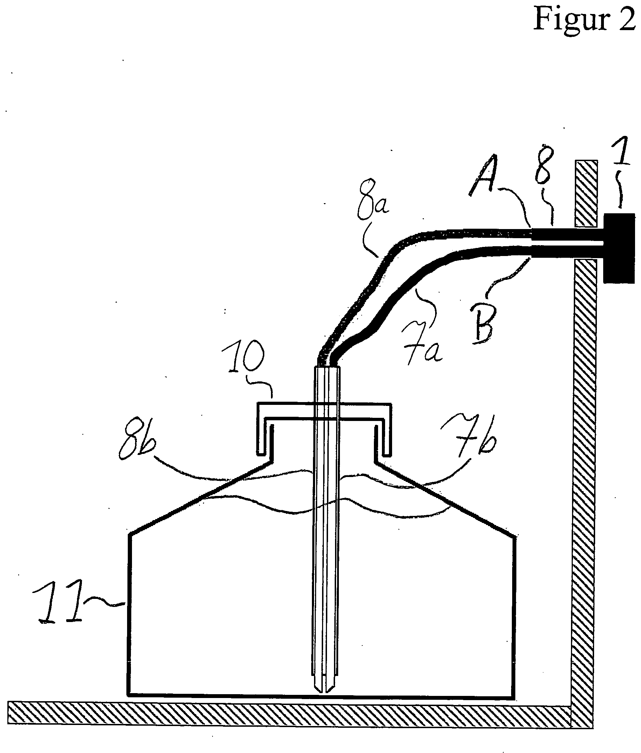

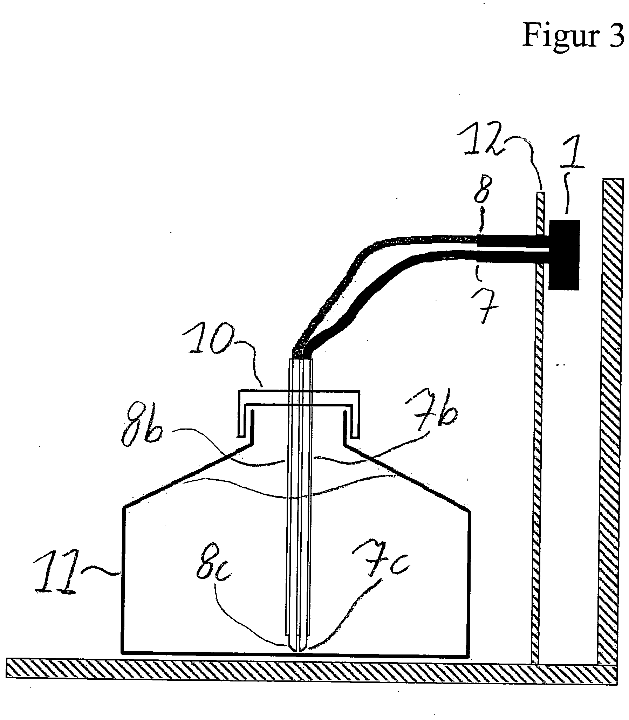

Die Druckverbindung 7 ist rohrartig ausgeführt, wobei ein Ende durch den Behälterdrucksensor 5 verschlossen ist. Das andere Ende wird (siehe Figuren 2 und 3) im Bereich des Bodens eines Behälters für flüssige Lebensmittel angeordnet, sodass der Flüssigkeitsdruck im Bodenbereich des Behälters mittels des Behälterdrucksensors 5 gemessen werden kann.

Mittels des Umgebungsdrucksensors 6 wird der Umgebungsdruck der Füllstandsmessvorrichtung und damit der Umgebungsdruck des Behälters und des sich im Behälter befindenden flüssigen Lebensmittels gemessen.

Die Auswerteeinheit 3 bestimmt aus den Messsignalen des Behälterdrucksensors 5 und Umgebungsdrucksensors 6 die Druckdifferenz zwischen dem Flüssigkeitsdruck im Bodenbereich des Behälters und dem Umgebungsdruck.

Hieraus wird gemäß folgender Formel 1 die Füllstandshöhe bestimmt:

$$h = \frac{dp}{\rho \cdot g} \qquad \text{(Formel 1)}$$

Mit der Füllstandshöhe $h$ [m], der Druckdifferenz $dp$ [N/m$^2$] der spezifischen Dichte $\rho$ [kg/m$^3$] und der Gravitationsbeschleunigung für die Erde $g$ [m/s$^2$].

Da typisch verwendete flüssige Lebensmittel in etwa die spezifische Dichte von Wasser aufweisen und die Gravitationsbeschleunigung der Erde für unterschiedliche Einsatzorte nur geringfügig schwankt, ist in der Auswerteeinheit 3 der Wert $\rho$ = 1.000 kg/m$^3$ und der

Wert $g$ = 9,81 m/s$^2$ vorgegeben.

Darüber hinaus können jedoch über eine (nicht dargestellte) Bedieneinheit von dem Benutzer über die elektrische Verbindung 9 diese Werte abgeändert werden, zur Anpassung an die genauen Werte für den Einsatzort der Füllstandsmessvorrichtung.

Die Auswerteeinheit 3 ermittelt gemäß obiger Formel 1 in Abhängigkeit des bestimmten Differenzdrucks zwischen Flüssigkeitsdruck und Umgebungsdruck die Füllstandshöhe und gibt diese über die elektrische Verbindung 9 an eine (nicht dargestellte) Anzeigeeinheit aus.

Bei leerem Behälter, d. h., wenn die Füllstandshöhe 0 oder nahe 0 ist, wird zudem ein Warnsignal über die elektrische Verbindung 9 ausgegeben, sodass der Benutzer auf den leeren oder nahezu leeren Behälter aufmerksam gemacht wird.

Weiterhin wird über die elektrische Verbindung 9 ein Sperrsignal ausgegeben. Die elektrische Verbindung 9 ist mit einer Steuereinheit einer Getränkeausgabevorrichtung verbunden, welche flüssiges Lebensmittel aus dem Behälter 11 bezieht. Durch das Sperrsignal wird die Ausgabe von flüssigem Lebensmittel unterbunden, sodass bei leerem oder nahezu leerem Behälter kein Getränk angefordert werden kann, sondern zunächst der Behälter 11 ausgetauscht werden muss.

Zusätzlich wird mittels des Temperaturfühlers 4 die Temperatur des in der Förderleitung 8 fließenden flüssigen Lebensmittels von der Auswerteeinheit 3 bestimmt und ebenfalls über die elektrische Verbindung 9 ausgegeben.

In Figur 2 ist die Verwendung der erfindungsgemäßen Füllstandsmessvorrichtung in einer Kühlvorrichtung dargestellt, wobei von der Kühlvorrichtung lediglich die rechte Wand und der Boden eines Isolierbehältnisses der Kühlvorrichtung schraffiert dargestellt sind. Die Füllstandsmessvorrichtung 1 ist außerhalb des Isolierbehältnisses der Kühlvorrichtung angebracht, wobei die Förderleitung 8 und Druckverbindung 7 die Seitenwand des Isolierbehältnisses durchdringen.

Wie in Figur 2 ersichtlich, umfasst die Füllstandsmessvorrichtung zusätzlich einen Verschluss 10. Bei Benutzung wird der Verschluss 10 auf den sich im Isolierbehältnis befindlichen Behälter 11 für flüssige Lebensmittel aufgesetzt. Die Druckverbindung 7 und die Förderleitung 8 weisen jeweils einen flexiblen Teil 7 a und 8 a auf, sowie einen im Wesentlichen starren Teil 7 b und 8 b, der an dem Verschluss 10 derart befestigt ist, dass bei auf dem Behälter 11 aufgesetzten Verschluss 10 die unteren Enden von Druckverbindung 7 und Förderleitung 8 in etwa in 0,5 cm Abstand zum Boden des Behälters 11 angeordnet sind.

Aufgrund der flexiblen Bereiche 7 a und 8 a ist ein einfaches Entfernen des Verschlusses 10 von dem Behälter möglich und die starren Bereiche 7 b und 8 b gewährleisten eine korrekte Positionierung der unteren Enden von Druckverbindung 7 und Förderleitung 8 in dem Behälter 11 bei Benutzung.

Der Verschluss 10 weist darüber hinaus eine kleine Öffnung (Durchmesser kleiner 0,5 cm) auf (nicht dargestellt), so dass bei Entnahme des flüssigen Lebensmittels Luft in den Behälter 11 eindringen kann und somit im nicht mit dem flüssigen Lebensmittel gefüllten Bereich des Behälters stets Umgebungsdruck vorliegt.

In Figur 3 ist ein weiteres Ausführungsbeispiel dargestellt, bei dem die Kühlvorrichtung zusätzlich eine Trennwand 12 aufweist, welche das Isolierbehältnis der Kühlvorrichtung in zwei Kammern aufteilt. Die Füllstandsmessvorrichtung ist in diesem Ausführungsbeispiel in dem Isolierbehältnis angeordnet und zwar in der durch die Trennwand 12 abgeteilten in Figur 3 rechts liegenden Kammer.

Die Trennwand 12 wird von der Druckverbindung 7 und der Förderleitung 8 durchdrungen, sodass diese - wie bereits in Figur 2 beschrieben - mit einem in der in Figur 3 links dargestellten Kammer stehenden Behälter 11 verbunden werden können.

In dem in Figur 3 dargestellten Ausführungsbeispiel muss daher lediglich die (nicht dargestellte) elektrische Verbindung 9 die isolierende Wand des Isolierbehältnisses der Kühlvorrichtung durchdringen. Darüber hinaus ist die Füllstandsmessvorrichtung 1 durch die Trennwand 12 vor Verschmutzung beispielsweise bei Austreten des flüssigen Lebensmittels aufgrund unsachgemäßer Benutzung beim Wechseln des Behälters 11 geschützt.

Weiterhin sind Druckverbindung und Förderleitung an den in Figur 2 mit A und B bezeichneten stellen lösbar verbunden, so dass zu Wartungszwecken und aus Hygienegründen die Teilbereiche 8a und 8b der Förderleitung sowie 7a und 7b der Druckverbindung in einfacher Weise ausgetauscht werden können, ohne dass die Auswerteeinheit und die Drucksensoren entfernt werden müssen.

Wie in den Figuren 2 und 3 ersichtlich, sind die starren Bereiche 7b und 8b von Druckverbindung 7 und Förderleitung 8 endseitig schräg angeschnitten (siehe Markierung 7c und 8c in Figur 3). Hierdurch kann die Länge der Bereiche 7b und 8b derart bemessen sein, dass bei auf dem Behälter 11 aufgesetzten Verschluss 10 die Enden 7c und 8c bis zum Boden des Behälters 11 reichen oder auf diesem aufstehen. Durch das schräge Anschneiden der starren Bereiche 7b und 8b ist stets gewährleistet, dass die Druckverbindung 7 und die Förderleitung 8 nicht durch den Boden des Behälters 11 verschlossen werden, sondern dass seitlich Flüssigkeit aus dem Behälter 11 in die Druckverbindung 7 und die Förderleitung 8 eintreten kann.

Selbstverständlich ist es ebenso möglich, anstelle des schrägen Anschneidens andere Ausgestaltungen des Endes der Druckverbindung 7 und der Förderleitung 8 zu wählen, welche ebenfalls ein Aufstehen auf dem Boden ermöglichen, ohne dass ein Verschließen der Förderleitung bzw. der Druckverbindung durch den Boden stattfindet. So können beispielsweise die Enden als Käfige ausgebildet sein oder sonstige seitliche Öffnungen im Endbereich aufweisen, welches ein seitliches Eindringen von Flüssigkeit in die Druckverbindung bzw. die Förderleitung ermöglichen.

**Patentansprüche**

1. Füllstandsmessvorrichtung (1) zum Messen des Füllstandes von flüssigen Lebensmitteln in einem Behälter (11), umfassend eine Sensoreinheit (12) und eine Auswerteeinheit (3), wobei die Auswerteeinheit (3) mit der Sensoreinheit (2) verbunden und derart ausgeführt ist, dass die Auswerteeinheit (3) abhängig von den Messsignalen der Sensoreinheit (2) den Füllstand des flüssigen Lebensmittels in dem Behälter (11) ermittelt, und die Sensoreinheit (2) einen Behälterdrucksensor (5) umfasst, wobei der Behälterdrucksensor (5) mit dem flüssigen Lebensmittel in dem Behälter (11) in Wirkverbindung bringbar ist zur Messung des Flüssigkeitsdruckes des flüssigen Lebensmittels in dem Behälter (11) und dass die Auswerteinheit (3) derart ausgeführt ist, dass sie den Füllstand des flüssigen Lebensmittels in dem Behälter (11) abhängig von der Differenz des gemessenen Flüssigkeitsdruckes zu einem Umgebungsdruck ermittelt **dadurch gekennzeichnet, dass** die Füllstandsmessvorrichtung mindestens eine Druckverbindung (7) umfasst, welche mit dem Behälterdrucksensor in Wirkverbindung steht, wobei die Druckverbindung (7) einen Verschluss (10) für den Behälter (11) umfasst und derart ausgeführt ist, dass bei auf den Behälter (11) aufgesetztem Verschluss (10) ein Ende der Druckverbindung (7) im Bereich des Bodens des Behälters (11) endet.

2. Füllstandsmessvorrichtung (1) nach Anspruch 1, **dadurch gekennzeichnet, dass** die Füllstandsmessvorrichtung (1) derart ausgeführt ist, dass der Flüssigkeitsdruck im Bereich des Bodens des Behälters (11) messbar ist, insbesondere in einer Höhe kleiner 5 cm über dem Boden des Behälters, höchstinsbesondere in einer Höhe kleiner 1 cm über dem Boden des Behälters.

3. Füllstandsmessvorrichtung (1) nach einem der Ansprüche 1 bis 2, dass die Auswerteeinheit (3) eine Eingabeeinheit umfasst und derart ausgeführt ist, dass der Umgebungsdruck über die Eingabeeinheit vorgebbar ist.

4. Füllstandsmessvorrichtung (1) nach einem der Ansprüche 1 bis 2, **dadurch gekennzeichnet, dass** die Sensoreinheit (2) zusätzlich einen Umgebungsdrucksensor (6) umfasst und der Umgebungsdrucksensor (6) derart angeordnet ist, dass mittels des Umgebungsdrucksensors der Druck in der Umgebung des Behälters (11) messbar ist und **dass** die Auswerteeinheit (3) derart ausgeführt ist, dass sie den Umgebungsdruck aus den Messsignalen des Umgebungsdrucksensors (6) ermittelt.

5. Füllstandsmessvorrichtung (1) nach einem der vorangegangenen Ansprüche, **dadurch gekennzeichnet, dass** der Behälterdrucksensor (5) flüssigkeitsdicht ausgeführt ist und mittels einer elektrischen Leitung zur Übertragung der Messsignale mit der Auswerteeinheit (3) verbunden ist.

6. Füllstandsmessvorrichtung (1) nach Anspruch 1, **dadurch gekennzeichnet, dass** die Druckverbindung (7) in einem Abstand kleiner 5 cm, höchstinsbesondere in einem Abstand kleiner 2 cm zu dem Boden des Behälters endet.

7. Füllstandsmessvorrichtung (1) nach Anspruch 6, **dadurch gekennzeichnet, dass** die Druckverbindung (7) einen starren (7 b) und einen flexiblen Teil (7 a) aufweist, wobei der bei auf den Behälter (11) aufgesetzten Verschluss (10) in den Behälter hineinreichende Teil (7 b) der Druckverbindung starr ausgeführt ist und der restliche Teil der Druckverbindung (7) zumindest stückweise flexibel ausgeführt ist.

8. Füllstandsmessvorrichtung (1) nach einem der Ansprüche 6 bis 7, **dadurch gekennzeichnet, dass** die Füllstandsmessvorrichtung (1) zusätzlich eine Förderleitung (8) aufweist, zur Förderung des flüssigen Lebensmittels aus dem Behälter (11) und dass die Förderleitung (8) zumindest teilweise mit dem in den Behälter (11) hineinreichenden Teil der Druckverbindung (7) angeordnet ist.

9. Füllstandsmessvorrichtung nach einem der vorangegangenen Ansprüche, **dadurch gekennzeichnet, dass** die Füllstandsmessvorrichtung (1) zusätzlich eine Förderleitung (8) für das flüssige Lebensmittel und einen Temperaturfühler (4) aufweist, wobei der Temperaturfühler (4) mit der Förderleitung (8) thermisch verbunden ist, derart, dass mittels des Temperaturfühlers (4) die Temperatur einer in der Förderleitung (8) fließenden Flüssigkeit messbar ist.

10. Kühlvorrichtung für flüssige Lebensmittel, umfassend ein Isolierbehältnis zur Aufnahme eines Behälters (11) für flüssige Lebensmittel, ein Kühlaggregat zum Kühlen des Isolierbehältnisses und eine Füllstandsmessvorrichtung (1) zum Messen des Füllstandes des flüssigen Lebensmittels in dem Behälter, **dadurch gekennzeichnet,**

**dass** die Füllstandsmessvorrichtung (1) gemäß einem der vorangegangenen Ansprüche ausgeführt ist.

11. Kühlvorrichtung für flüssige Lebensmittel gemäß Anspruch 10,
**dadurch gekennzeichnet,**
**dass** die Füllstandsmessvorrichtung (1) in dem Isolierbehältnis angeordnet ist.

12. Kühlvorrichtung für flüssige Lebensmittel gemäß Anspruch 11,
**dadurch gekennzeichnet,**
**dass** das Isolierbehältnis durch eine Trennwand (12) in zwei Kammern unterteilt ist, wobei eine erste Kammer zur Aufnahme des Behälters (11) für flüssige Lebensmittel ausgeführt ist und in einer zweiten Kammer zumindest die Auswerteeinheit (3) der Füllstandsmessvorrichtung (1) angeordnet ist.

**Claims**

1. Fill level measuring device (1) for measuring the fill level of fluid foodstuffs in a container (11), comprising a sensor unit (12) and an analysing unit (3), the analysing unit (3) being connected to the sensor unit (2) and being configured in such a way that the analysing unit (3) determines the fill level of the fluid foodstuff in the container (11) in dependence upon the measurement signals of the sensor unit (2), and the sensor unit (2) comprises a container pressure sensor (5), the container pressure sensor (5) being arranged to be brought into operative connection with the fluid foodstuff in the container (11) to measure the fluid pressure of the fluid foodstuff in the container (11) and
the analysing unit (3) is configured in such a way that it determines the fill level of the fluid foodstuff in the container (11) in dependence upon the difference between the measured fluid pressure and an ambient pressure,
**characterised in that**
the fill level measuring device comprises at least one pressure connector (7) which is in operative connection with the container pressure sensor, the pressure connector (7) comprising a closure (10) for the container (11) and being configured in such a way that, when the closure (10) is mounted on the container (11), one end of the pressure connector (7) ends in the region of the bottom of the container (11).

2. Fill level measuring device (1) according to claim 1,
**characterised in that**
the fill level measuring device (1) is configured in such a way that the fluid pressure is measurable in the region of the bottom of the container (11), especially at a height of less than 5 cm above the bottom of the container, most especially at a height of less than 1 cm above the bottom of the container.

3. Fill level measuring device (1) according to either one of claims 1 and 2,
**characterised in that**
the analysing unit (3) comprises an input unit and is configured in such a way that the ambient pressure is specifiable by means of the input unit.

4. Fill level measuring device (1) according to either one of claims 1 and 2,
**characterised in that**
the sensor unit (2) additionally comprises an ambient pressure sensor (6), and the ambient pressure sensor (6) is arranged in such a way that the pressure in the vicinity of the container (11) is measurable by means of the ambient pressure sensor and
the analysing unit (3) is configured in such a way that it determines the ambient pressure on the basis of the measurement signals of the ambient pressure sensor (6).

5. Fill level measuring device (1) according to any one of the preceding claims,
**characterised in that**
the container pressure sensor (5) is of fluid-tight construction and is connected to the analysing unit (3) by means of an electrical line for transmission of the measurement signals.

6. Fill level measuring device (1) according to claim 1,
**characterised in that**
the pressure connector (7) ends at a distance of less than 5 cm, most especially at a distance of less than 2 cm, from the bottom of the container.

7. Fill level measuring device (1) according to claim 6,
**characterised in that**
the pressure connector (7) has a rigid portion (7b) and a flexible portion (7a), wherein that portion (7b) of the pressure connector which extends into the container (11) when the closure (10) is mounted on the container is of rigid construction and the remaining portion of the pressure connector (7) is, at least in parts, of flexible construction.

8. Fill level measuring device (1) according to either one of claims 6 and 7,
**characterised in that**
the fill level measuring device (1) additionally has a conveyor line (8) for conveying the fluid foodstuff out of the container (11), and the conveyor line (8) is arranged at least partly with that portion of the pressure connector (7) which extends into the container (11).

9. Fill level measuring device according to any one of the preceding claims,
**characterised in that**
the fill level measuring device (1) additionally has a conveyor line (8) for the fluid foodstuff and a temperature sensor (4),
the temperature sensor (4) being thermally connected to the conveyor line (8) in such a way that the temperature of a fluid flowing in the conveyor line (8) is measurable by means of the temperature sensor (4).

10. Cooling device for fluid foodstuffs,
comprising an insulating vessel for receiving a container (11) for fluid foodstuffs, a cooling assembly for cooling the insulating vessel, and a fill level measuring device (1) for measuring the fill level of the fluid foodstuff in the container,
**characterised in that**
the fill level measuring device (1) is configured in accordance with any one of the preceding claims.

11. Cooling device for fluid foodstuffs according to claim 10,
**characterised in that**
the fill level measuring device (1) is arranged in the insulating vessel.

12. Cooling device for fluid foodstuffs according to claim 11,
**characterised in that**
the insulating vessel is divided into two chambers by a partition wall (12), a first chamber being configured for receiving the container (11) for fluid foodstuffs, and at least the analysing unit (3) of the fill level measuring device (1) being arranged in a second chamber.


**Revendications**

1. Dispositif (1) mesureur de niveaux de remplissage, conçu pour mesurer le niveau de remplissage d'aliments liquides dans un récipient (11),
comprenant une unité de détection (2) et une unité d'évaluation (3), laquelle unité d'évaluation (3) est raccordée à l'unité de détection (2) et est réalisée de façon telle que ladite unité d'évaluation (3) détermine le niveau de remplissage de l'aliment liquide, dans le récipient (11), en fonction des signaux de mesure de ladite unité de détection (2),
laquelle unité de détection (2) inclut un capteur (5) de pression de récipient, ledit capteur (5) de pression du récipient pouvant être mis en liaison opérante avec l'aliment liquide, dans le récipient (11), en vue de mesurer la pression dudit aliment liquide dans ledit récipient (11), et
l'unité d'évaluation (3) étant réalisée de telle sorte qu'elle détermine le niveau de remplissage de l'aliment liquide, dans le récipient (11), en fonction de la différence entre la pression du liquide mesurée, et une pression environnante,
**caractérisé par le fait**
que ledit dispositif mesureur de niveaux de remplissage inclut au moins un raccord de pression (7) en liaison opérante avec le capteur de pression du récipient, ledit raccord de pression (7) incluant une obturation (10) affectée au récipient (11), et étant réalisé de manière qu'une extrémité dudit raccord de pression (7) s'achève dans la région du fond dudit récipient (11) lorsque ladite obturation (10) est mise en place sur ledit récipient (11).

2. Dispositif (1) mesureur de niveaux de remplissage, selon la revendication 1,
**caractérisé par le fait**
que ledit dispositif (1) mesureur de niveaux de remplissage est réalisé de façon telle que la pression du liquide puisse être mesurée dans la région du fond du récipient (11), en particulier à une hauteur inférieure à 5 cm au-dessus du fond dudit récipient, à une hauteur inférieure à 1 cm au-dessus dudit fond du récipient avec particularité maximale.

3. Dispositif (1) mesureur de niveaux de remplissage, selon l'une des revendications 1 à 2,
**caractérisé par le fait**
que l'unité d'évaluation (3) inclut une unité de saisie, et est réalisée de telle sorte que la pression environnante puisse être préétablie par l'intermédiaire de ladite unité de saisie.

4. Dispositif (1) mesureur de niveaux de remplissage, selon l'une des revendications 1 à 2,
**caractérisé par le fait**
que l'unité de détection (2) est additionnellement munie d'un capteur (6) de pression environnante, lequel capteur (6) de pression environnante est disposé de telle sorte que la pression, régnant dans l'espace environnant du récipient (11), puisse être mesurée au moyen dudit capteur de pression environnante ; et
par le fait que l'unité d'évaluation (3) est réalisée de façon telle qu'elle détermine ladite pression environnante sur la base des signaux de mesure dudit capteur (6) de pression environnante.

5. Dispositif (1) mesureur de niveaux de remplissage, selon l'une des revendications précédentes,
**caractérisé par le fait**
que le capteur (5) de pression du récipient est de réalisation étanche aux liquides et est connecté à l'unité d'évaluation (3) au moyen d'un conducteur électrique, en vue de la transmission des signaux de mesure.

6. Dispositif (1) mesureur de niveaux de remplissage, selon la revendication 1,
**caractérisé par le fait**
**que** le raccord de pression (7) s'achève à une distance inférieure à 5 cm, avec particularité maximale à une distance inférieure à 2 cm par rapport au fond du récipient.

7. Dispositif (1) mesureur de niveaux de remplissage, selon la revendication 6,
**caractérisé par le fait**
**que** le raccord de pression (7) comprend des parties rigide (7b) et flexible (7a), sachant que la partie (7b) dudit raccord de pression, pénétrant dans le récipient lorsque l'obturation (10) est mise en place sur ledit récipient (11), est de réalisation rigide et que la partie restante dudit raccord de pression (7) est de réalisation flexible, au moins par tronçons.

8. Dispositif (1) mesureur de niveaux de remplissage, selon l'une des revendications 6 à 7,
**caractérisé par le fait**
**que** ledit dispositif (1) mesureur de niveaux de remplissage est additionnellement pourvu d'un conduit de refoulement (8), conçu pour refouler l'aliment liquide hors du récipient (11); et par le fait que ledit conduit de refoulement (8) est implanté, au moins partiellement, avec la partie du raccord de pression (7) qui pénètre dans ledit récipient (11).

9. Dispositif mesureur de niveaux de remplissage, selon l'une des revendications précédentes,
**caractérisé par le fait**
**que** ledit dispositif (1) mesureur de niveaux de remplissage est additionnellement doté d'un conduit de refoulement (8) dédié à l'aliment liquide, et d'une sonde de température (4), laquelle sonde de température (4) est en liaison thermique avec le conduit de refoulement (8) de façon telle que la température d'un liquide, d'écoulant dans ledit conduit de refoulement (8), puisse être mesurée au moyen de ladite sonde de température (4).

10. Dispositif de réfrigération pour aliments liquides, comprenant un réceptacle isolant dévolu à la réception d'un récipient (11) dédié à des aliments liquides, un groupe de réfrigération destiné à réfrigérer ledit réceptacle isolant, et un dispositif (1) mesureur de niveaux de remplissage, conçu pour mesurer le niveau de remplissage de l'aliment liquide dans ledit récipient,
**caractérisé par le fait**
**que** le dispositif (1) mesureur de niveaux de remplissage est réalisé en conformité avec l'une des revendications précédentes.

11. Dispositif de réfrigération pour aliments liquides, selon la revendication 10,
**caractérisé par le fait**

**que** le dispositif (1) mesureur de niveaux de remplissage est logé dans le réceptacle isolant.

12. Dispositif de réfrigération pour aliments liquides, selon la revendication 11,
**caractérisé par le fait**
**que** le réceptacle isolant est scindé en deux compartiments par une cloison séparatrice (12), un premier compartiment étant réalisé en vue de recevoir le récipient (11) dédié à des aliments liquides, et au moins l'unité d'évaluation (3) du dispositif (1) mesureur de niveaux de remplissage étant logée dans un second compartiment.

Figur 1

Figur 2

# Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040011127 A1
- GB 2186317 A
- US 6425293 B1
- GB 2157963 A
- US 6260477 B1